# EUROPÄISCHE PATENTSCHRIFT

(11) **EP 1 989 243 B1**
(45) Veröffentlichungstag und Bekanntmachung des Hinweises auf die Patenterteilung: **05.06.2013**
(21) Anmeldenummer: 07711504.6
(22) Anmeldetag: 12.02.2007
(51) Int. Cl.: C08G 18/28, C08G 18/30, C08G 18/70, C09J 175/02

(54) **DISPERSIONEN MIT NANOHARNSTOFFEN**
DISPERSIONS COMPRISING NANOUREAS
DISPERSIONS CONTENANT DES NANO-UREES

(30) Priorität: 24.02.2006 DE 102006008690
(43) Veröffentlichungstag der Anmeldung: 12.11.2008
(73) Patentinhaber: Bayer Intellectual Property GmbH, 40789 Monheim (DE)
(72) Erfinder: DÖRR, Sebastian, 40597 Düsseldorf (DE); BLUM, Harald, 97840 Hafenlohr (DE); MATNER, Mathias, 41464 Neuss (DE)
(74) Vertreter: BIP Patents
(86) Internationale Anmeldenummer: PCT/EP2007/001163
(87) Internationale Veröffentlichungsnummer: WO 2007/098851

(56) Entgegenhaltungen:
- WO-A-2005/063873
- US-A- 4 171 391
- DATABASE WPI Week 200570 Derwent Publications Ltd., London, GB; AN 2005-683929 XP002437818 & WO 2005/083021 A1 (NIPPON POLYURETHANE IND CO LTD) 9. September 2005 (2005-09-09)
- DATABASE WPI Week 199937 Derwent Publications Ltd., London, GB; AN 1999-437872 XP002437819 & JP 11 179193 A (MITSUBISHI PAPER MILLS LTD) 6. Juli 1999 (1999-07-06)

## Beschreibung

Die Erfindung betrifft wässrige Dispersionen von Nanoharnstoffen, die eine bestimmte Ladungsdichte auf der Partikeloberfläche aufweisen, ein Verfahren zu deren Herstellung und deren Verwendung in Bindemittel.

Die Herstellung von wässrigen Dispersionen nanoskaliger Harnstoffpartikel wird in der WO-A 2005/063873 beschrieben. Dabei werden hydrophile Isocyanate in Gegenwart eines Katalysators in Wasser gegeben, wodurch eine Quervernetzung innerhalb der dispergierten Partikel durch Harnstoff-Bindungen stattfindet. Diese Partikel werden dort als Additive für Kontaktklebstoffe auf Basis von Polychloropren eingesetzt.

Die in der WO-A 2005/063873 beschriebenen Nanohamstoff-Dispersionen haben allerdings einige Nachteile, die den Herstellungsprozess sowie die Lagerungsstabilität der Dispersionen betreffen. Bei der Herstellung der Nanopartikel nach dem in der WO-A 2005/063873 offenbarten Verfahren, findet bedingt durch eine Kohlendioxid-Abspaltung ein sehr starkes Aufschäumen des Reaktionsansatzes statt, was die Reaktionsführung erheblich beeinträchtigt. Des Weiteren sind die beschriebenen Dispersionen nicht lagerstabil, da es im Laufe der Lagerzeit zu einer unerwünschten Gasentwicklung kommt.

Ein weiteres, wesentliches Problem der in der WO-A 2005/063873 beschriebenen Dispersionen besteht in dem nur unzureichenden Festkörpergehalt. Festkörpergehalte über 30 Gew.-% lassen sich mit dem in der WO-A 2005/063873 offenbarten Verfahrensweise praktisch nicht herstellen. Ebenfalls zeigen die beschriebenen Nanoharnstoff-Dispersionen Verträglichkeitsprobleme mit anionisch hydrophilierten Lacken oder Klebstoff-Dispersionen, was den Einsatz in anderen Anwendungsbereichen bei wässrigen Applikationen stark einschränkt.

In US 4,171,391 werden anionisch und kationisch hydrophilierte Polyharnstoff-Partikel beschrieben, die durch Abbau von Diisocyanaten zu Polymerketten in Wasser hergestellt werden. Diese weisen aber keine Quervernetzung auf und zeigen daher elastomeres Verhalten. Weiterhin wird durch ionische Hydrophilierung eine hohe positive bzw. negative Oberflächenladung und damit ein entsprechend hohes Zetapotential erzeugt. Dadurch ist eine weitreichende Verträglichkeit mit anderen Dispersionen nicht gegeben.

Der vorliegenden Erfindung lag daher die Aufgabe zugrunde, lagerstabile Nanoharnstoff-Dispersionen mit einem Feststoffgehalt von >30 Gew.-% bereitzustellen, die mit anionisch hydrophilierten Bindemitteln verträglich sind. Darüber hinaus sollte ein neues Verfahren bereitgestellt werden, mit dem sich die zuvor beschriebenen Probleme im Verfahrensprozess lösen lassen.

Es wurde nun gefunden, dass Dispersionen, die Nanoharnstoff-Partikel enthalten und über ein bestimmtes Zeta-Potential verfügen, mit Dispersionen anionisch hydrophilierter Polymere verträglich sind und einen Feststoffgehalt von über 30 Gew.-% aufweisen. Des Weiteren wurde ein neues Verfahren zur Herstellung der erfindungsgemäßen Dispersionen gefunden, bei dem keine Quervernetzung bereits vorhandener Nanoharnstoff-Partikel mit den weiter zugefügten Polyisocyanaten stattfindet. Es findet auch keine Aufpfropfung der hydophilierten Polyisocyanate auf bestehende Teilchen statt, was zu großen Partikeln und dadurch zu instabilen Dispersionen führen würde.

Gegenstand der vorliegenden Erfindung sind somit Nanoharnstoff-Dispersionen, enthaltend Nanoharnstoff-Partikel mit einer Partikelgröße von 10 bis 300 nm, bevorzugt von 20 bis 250 nm, besonders bevorzugt von 30 bis 200 nm und einem Zeta-Potential (bei pH (23°C) =8,0) von 0 bis 40 mV, bevorzugt 1 bis 35 mV und besonders bevorzugt von 3 bis 30 mV.

Bei den erfindungsgemäßen Nanoharnstoff Dispersionen handelt es sich um wässrige Dispersionen von Partikeln, die intrapartikulär im Wesentlichen durch Harnstoffbindungen quervernetzt sind. Die unvernetzten oder vorvemetzen Partikel bilden sich durch Dispergierung hydrophilierter Polyisocyanate in Wasser. Anschließend wird ein Teil der vorhandenen Isocyanatgruppen durch eine Isocyanat-Wasser-Reaktion zum primären oder sekundären Amin abgebaut. Diese Aminogruppen bilden durch Abreaktion mit weiteren Isocyanatgruppen Harnstoffgruppen und vernetzten dadurch zu Nanoharnstoff-Partikel. Ein Teil der Isocyanatgruppen kann dabei auch vor oder während der Reaktion mit Wasser oder mit anderen Isocyanat-reaktiven Spezies, wie z.B. primären oder sekundären Aminen und/oder Alkoholen umgesetzt werden.

Die in den erfindungsgemäßen Nanoharnstoff-Dispersionen enthaltenen Partikel weisen auf der Partikeloberfläche kationische oder basische Gruppen, gemessen über eine Säure-Base-Titration, in einer Menge von 0 bis 95 µmol pro Gramm Festkörper, bevorzugt von 2 bis 70 µmol pro Gramm Festkörper und besonders bevorzugt von 3 bis 20 µmol pro Gramm Festkörper auf.

Ebenfalls Gegenstand der vorliegenden Erfindung ist ein Verfahren zur Herstellung der erfindungsgemäßen Nanoharnstoff-Dispersionen, dadurch gekennzeichnet, dass in einem ersten Schritt Polyisocyanate, die über nichtionischen Gruppen als Hydrophilierung verfügen, mit Wasser vermischt werden und danach zu Harnstoff-Gruppen abgebaut werden, wobei das Verhältnis von hydrophiliertem Polyisocyanat zu Wasser so gewählt wird, dass ein Gesamt-Gewichtsverhältnis zwischen 1 zu 20 und 1 zu 0,75 bevorzugt zwischen 1 zu 10 und 1 zu 1, besonders bevorzugt zwischen 1 zu 3 und 1 zu 1,5 resultiert. Bevorzugte Vorgehensweise ist dabei die portionsweise Zugabe des hydrophilierten Polyisocyanates zu dem Wasser, wobei die Gesamtmenge des hydrophilierten Polyisocyanates in 2 bis 50 gleich oder unterschiedlich große Portionen, bevorzugt sind 3 bis 20 Portionen und besonders bevorzugt 4 bis 10 Portionen aufgeteilt wird und nach Zugabe jeder Polyisocyanat-Portion zwischen 5 Minuten und 12 Stunden gewartet wird, bis die nächste Portion zugegeben wird. Bevorzugt ist eine Wartezeit zwischen 10 Minuten und 8 Stunden, besonders bevorzugt zwischen 30 Minuten und 5 Stunden. Alternativ kann auch, zumindest teilweise das Isocyanat kontinuierlich zudosiert werden, beispielsweise im Verlauf von 1 Stunde und 24 Stunden, bevorzugt im Verlauf von 2 Stunden und 15 Stunden. Im erfindungsgemäßen Verfahren werden Kesseltemperaturen während der Reaktion zwischen 10 und 80°C, besonders bevorzugt zwischen 20 und 70°C und ganz besonders bevorzugt zwischen 25 und 50°C eingehalten.

Die Dispergierung des hydrophilierten Isocyanates und die Reaktion erfolgt bevorzugt mittels Durchmischung durch ein Rührwerk, andere Arten der Durchmischung wie z.B. durch Umpumpen, Statikmischer, Stachelmischer, Düsenstrahldispergator, Rotor und Stator, oder unter Einfluss von Ultraschall.

Im Anschluss an die Reaktion wird die erfindungsgemäße Dispersion evakuiert, wobei die Temperaturen dafür zwischen 0°C und 80°C, bevorzugt zwischen 20°C und 60°C und besonders bevorzugt zwischen 25°C und 50°C liegen. Während der Evakuierung ist ein Druck zwischen 1 und 900 mbar, bevorzugt zwischen 10 und 800 mbar, besonders bevorzugt zwischen 100 und 400 mbar einzustellen. Als Dauer der Evakuierung eignen sich beispielsweise Zeiten zwischen 1 Minute und 24 Stunden, bevorzugt zwischen 10 Minuten und 8 Stunden. Auch die Nachbehandlung durch Temperaturerhöhung ohne Evakuierung ist möglich. In einem bevorzugten Verfahren wird gleichzeitig mit der Evakuierung die Nanoharnstoff-Dispersion durchmischt, z.B. durch Rühren.

In einer weiteren Variante des erfindungsgemäßen Verfahrens wird das hydrophilierte Polyisocyanat in einem Rührkessel (A) mit Wasser vermischt und dabei dispergiert. Bei diesem Verfahren wird ein Teil der Gesamtmenge des hydrophilierten Polyisocyanates in 2 bis 50 gleich oder unterschiedlich große Portionen, bevorzugt sind 3 bis 20 Portionen und besonders bevorzugt 4 bis 10 Portionen aufgeteilt und mit einem Teil der Gesamtmenge des einzusetzenden Wassers, der in 2 bis 50 gleich oder unterschiedlich große Portionen, bevorzugt 3 bis 20 Portionen und besonders bevorzugt 4 bis 10 Portionen aufgeteilt wird, dispergiert wird. Auch hier wird das Verhältnis von hydrophiliertem Polyisocyanat zu Wasser so gewählt, dass ein Gewichtsverhältnis zwischen 1 zu 10 und 5 zu 1, bevorzugt zwischen 1 zu 5 und 3 zu 1, besonders bevorzugt zwischen 1 zu 3 und 1 zu 1 resultiert. Bei der Dispergierung werden Kesseltemperaturen zwischen 0 und 60°C, bevorzugt zwischen 10 und 50°C und besonders bevorzugt zwischen 25 und 40°C eingehalten.

Nach der Dispergierung wird die jeweilige Dispersion in einen anderen Kessel (B) überführt. Die Temperatur in diesem Kessel (B) ist höher als die Temperatur in dem Kessel (A), der zur Dispergierung dient. Die Temperatur im Kessel (B) liegt zwischen 25 und 80°C, bevorzugt zwischen 30 und 70°C und besonders bevorzugt zwischen 35 und 60°C. In dem Kessel (B) wird bevorzugt ein Katalysator, gegebenenfalls in einer Mischung mit Wasser vorgelegt.

Nach Überführung der Dispersion von Kessel (A) in Kessel (B) ist eine Wartezeit zwischen 5 Minuten und 12 Stunden, bis die nächste Portion zugegeben wird, einzuhalten. Bevorzugt ist eine Wartezeit zwischen 10 Minuten und 8 Stunden, besonders bevorzugt zwischen 30 Minuten und 5 Stunden. Alternativ kann auch, zumindest teilweise die Dispersion kontinuierlich von Kessel (A) in Kessel (B) überführt werden, beispielsweise im Verlauf von 1 Stunde und 24 Stunden, bevorzugt im Verlauf von 2 Stunden und 15 Stunden.

Bevorzugt ist das Verfahren, in welchem Dispergierung und Reaktion in einem einzigen Gefäß stattfindet.

Geeignete Katalysatoren bei der Reaktion sind beispielsweise tertiäre Amine. Geeignete Verbindungen sind z.B. Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethylhexandiamin- 1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2, 2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)ethanol, N,N', N-Tris-(dialkylaminoalkyl)hexahydrotriazine, z.B. N,N',N-Tris-(dimethylaminopropyl)- s-hexahydrotriazin.

Bevorzugt sind als Katalysatoren tertiäre Amine, besonders bevorzugt sind Triethylamin, Ethyldiisopropylamin und 1,4-Diazabicyclo-[2,2,2]-octan. Die Katalysatoren werden in Mengen von 0,01 bis 8 Gew.-%, bevorzugt von 0,05 bis 5 Gew.-%, besonders bevorzugt von 0,1 bis 3 Gew.-%, bezogen auf den gesamten Festkörpergehalt, eingesetzt. Es können auch Gemische der Katalysatoren zugesetzt werden.

Zur Herstellung der erfindungsgemäßen Nanoharnstoff-Dispersion können gegebenenfalls zusätzlich zu der Reaktion der Isocyanatgruppen mit Wasser auch isocyanatreaktive Gruppen enthaltende Verbindungen eingesetzt werden. Dabei kommen beispielsweise alle bekannten aliphatischen, cycloaliphatischen, araliphatischen und aromatischen Mono-, Di- und Polyamine in Frage, ebenso wie Aminogruppen enthaltende Polymere wie Aminopolyether oder Oligoethylenimine. Eingesetzt werden können Monoamine wie Methyl-, Ethyl-, (Iso)propyl- und Butylamin oder Diisopropylamin, Diamine und Triamine wie Ethylendiamin, *N,N'-*Dimethylethylendiamin, 1,3-Propylendiamin, 1,6-Hexamethylendiamin, Isophorondiamin, 4,4'-Diaminodicyclohexylmethan, Diethylentriamin, Triethylentetramin, 1,3- und 1,4-Phenylendiamin, 4,4'-Diphenylmethandiamin, Hydrazin, Methylenbisanilin oder Triaminononan. Geeignet sind auch heterocyclische Amine wie Pyrazol und Triazol bzw. deren Derivate und amonifunktionelle Polyethylenoxide oder Propylenoxide. Bevorzugt werden Diamine eingesetzt, besonders bevorzugt Ethylendiamin, 1,3-Propylendiamin, 1,6-Hexamethylendiamin, Isophorondiamin, 4,4'-Diaminodicyclohexylmethan oder Hydrazin. Auch die teilweise Kettenverlängerung durch andere di-, tri- oder höherfunktionelle, isocyanatreaktive Verbindungen wie Alkohole, Thiole ist möglich. Beispiele sind 1,4-Butandiol, 1,4-Cyclohexandimethanol, 1,6-Hexandiol, Trimethylolethan, Trimethylolpropan, Glycerin oder 1,2-Ethanthiol. Auch Moleküle mit verschiedenen isocyanatreaktiven Gruppen können eingesetzt werden, wie z.B. N-Methylethanol- und N-Methylisopropanolamin, 1-Amino-propanol, Diethanolamin, 1,2-Hydroxyethanthiol oder 1-Aminopropanthiol.

Das Verhältnis der zugesetzten, isocyanatreaktiven Gruppen zu den Isocyanatgruppen wird kleiner als 0,5, bevorzugt kleiner 0,3, besonders bevorzugt kleiner als 0,2 gewählt. Der Zusatz der beschriebenen Verbindungen ist vor Zugabe des Wassers, gleichzeitig oder danach möglich. Auch eine Lösung von Verbindungen mit isocyanatreaktiven Gruppen kann dem Dispergierwasser zugesetzt werden.

Geeignete Polyisocyanate zur Herstellung der erfindungsgemäßen Nanohamstoff-Dispersionen sind Polyisocyanate mit einem Isocyanatgehalt von 0,5 bis 50, bevorzugt 3 bis 30, besonders bevorzugt 5 bis 25 Gew.-% oder deren Gemische. Geeignete Polyisocyanate, sind Biuret-, Isocyanurat- oder Uretdiongruppen aufweisende Modifizierungsprodukte des Hexamethylendiisocyanats oder des Isophorondiisocyanats. Besonders bevorzugt sind Polyisocyanate, die auf Hexamethylendiisocyanat basieren.

Hydrophilierungsmittel sind Verbindungen mit nichtionischen hydrophilen Gruppen.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Methanol, Butanol sowie Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Es können auch Gemische verschiedener Hydrophilierungsmittel eingesetzt werden. Der Einbau der Hydrophilierungsmittel in die erfindungsgemäß einzusetzenden Polyisocyanate kann nach an sich bekanntem Verfahren erfolgen.

Die erfindungsgemäßen Nanoharnstoff-Dispersionen weisen einen Festkörpergehalt von 31 bis 65 Gew.-%, bevorzugt von 35 bis 55 Gew.-%, besonders bevorzugt von 40 bis 50 Gew.-% auf.

Die erfindungsgemäßen Nanohamstoff-Dispersionen zeichnen sich dadurch aus, dass sie nur eine bestimmte Zahl an basischen Gruppen auf der Oberfläche enthalten. Daher sind die erfindungsgemäßen Dispersionen mischbar mit Dispersionen anionisch hydrophilierter Polymere und damit zum Einsatz in Kombination mit derartigen Dispersionen geeignet.

Bei der Herstellung der Nanohamstoff-Dispersionen können auch Colöser, Entschäumer, oberflächenaktive Detergentien und andere Hilfsmittel und Additive verwendet werden. Auch weitere Additive aus Bereichen wie Lack-, Dichtstoff- oder Klebstoffformulierung wie beispielsweise Pigmente oder Füllstoffe können zugesetzt werden.

Die erfindungsgemäßen Nanoharnstoff-Dispersionen können beispielsweise als Additiv, Bindemittel oder Hilfs- oder Zusatzstoff zur Herstellung von Beschichtungsmitteln wie Lacke, Farben, Klebstoffen und Dichtstoffen eingesetzt werden.

Gegenstand der vorliegenden Erfindung ist auch die Verwendung der erfindungsgemäßen Nanoharnstoff-Dispersionen zur Herstellung von Lacken, Farben, Klebstoffen und Dichtstoffen.

Ebenfalls Gegenstand der vorliegenden Erfindung sind Beschichtungsmittel enthaltend die erfindungsgemäßen Nanoharnstoff-Dispersionen.

Die Herstellung der Lacke, Farben, Klebstoffe und anderen Formulierungen mit den erfindungsgemäßen Nanoharnstoff-Dispersionen erfolgt nach an sich bekannten Methoden. Außer den Nanohamstoff-Dispersionen können den Formulierungen übliche Additive und andere Hilfsstoffe wie Pigmente, Bindemittel, Füllstoffe, Verlaufsmittel, Entschäumer, Dispergierhilfsmittel und Katalysatoren in durch den Fachmann leicht zu ermittelnden Mengen zugesetzt werden.

Zur Konservierung können der erfindungsgemäßen Dispersion auch Biozide zugesetzt werden. Diese kommen vorzugsweise in Mengen von 0,02 bis 1 Gew.-%, bezogen auf nichtflüchtige Anteile, zum Einsatz. Geeignete Fungizide sind beispielsweise Phenol- und Kresolderivate oder zinnorganische Verbindungen.

### Beispiele

### Koagulationstests

Die anionisch hydrophilierten Dispersionen Impranil^{®} DLN (anionische, aliphatische Polyesterpolyurethan-Dispersion in Wasser mit einem Feststoffgehalt von ca. 40 %, Bayer MaterialScience AG, Deutschland) bzw. Dispercoll^{®} U 54 (anionische, aliphatische Polyesterpolyurethan-Dispersion in Wasser mit einem Feststoffgehalt von ca. 50 %, Bayer MaterialScience AG, Leverkusen, DE) wurden zu jeweils 20 ml in der Lieferform vorgelegt und je 3 ml der Nanoharnstoff-Dispersion zugesetzt. Nach Zugabe oder einigen Minuten Rühren mit einem Glasstab zeigte sich, ob eine Koagulation statt fand.

### Chemikalien

- Bayhydur^{®} VP LS 2336: Hydrophiliertes Polyisocyanat auf Basis von Hexamethylendiisocyanat, lösemittelfrei, Viskosität ca. 6800 mPa s, Isocyanat-Gehalt ca. 16,2%, Bayer MaterialScienceAG, Leverkusen, DE.
- Isofoam^{®} 16: Entschäumer, Petrofer-Chemie, Hildesheim, DE.

### Ladungsbestimmung

Eine Portion der Probe wird auf 0,0001 g genau eingewogen (Masse typischerweise zwischen 0,2 g und 1 g, je nach Ladungsmenge) mit einer 5 gew.%igen wässrigen Tensidlösung (Brij^{®}-96 V, Fluka, Buchs, Schweiz Produkt-Nr. 16011) und zweifach entionisiertem Wasser versetzt und nach Zusatz einer definierten Menge Salzsäure (0,1 n, damit der Ansatz einen Start-pH-Wert von ca. pH 3 aufweist; KMF Laborchemie GmbH, Lohmar, Art.Nr.: KMF.01-044.1000) mit wässriger Natronlauge-Maßlösung (0,05 n; Bernd Kraft GmbH, Duisburg, Art.Nr.: 01056.3000) titriert. Zusätzlich wird zur Differenzierung der Oberflächenladung und der Serumsladung ein Teil (ca. 30 g) der Dispersion mit Ionenaustauscher Lewatit^{®} VP-OC 1293 (Einsatz der 10-fachen Austauschkapazität bezogen auf die bestimmte Gesamtladung, Rührzeit 2,0 h, Lanxess AG, Leverkusen, gemischter Anionen/Kationen-Austauscher) behandelt und die erhaltene Dispersion nach Filtration (E-D-Schnellsieb, Baumwollgewebe 240 µm, Fa. Erich Drehkopf GmbH, Ammersbek) titriert. Bei der Titration der Probe nach Ionenaustauscherbehandlung wird die Oberflächenladung bestimmt. Durch Differenzbildung mit der Gesamtladung kann die Serumladung ermittelt werden.

Die Bestimmung der Oberflächenladung aus den Equivalenzpunkten ergibt, innerhalb der Messgenauigkeit, einen vergleichbaren Wert zu der Ermittlung basischer Gruppen aus dem Minderverbrauch an Natronlauge, bezogen auf die zugesetzte Menge an Salzsäure.

Hieraus folgert, das es sich bei den bestimmten Ladungsmengen um basische und nicht um schwach saure Gruppen (z.B. Carboxylgruppen) handelt.

Die Bezeichnung µeq/g steht für Mikroequivalent pro Gramm Festkörper, ein Equivalent ist ein Mol ionische Gruppen.

### Zetapotentialbestimmung

Eine geringe Menge der Probe wird stark mit 1mmolarer Kaliumchloridlösung verdünnt, durch Rühren homogenisiert. Zur Einstellung des pH-Wertes von 8,0 werden verdünnte Salzsäure bzw. Natronlauge verwendet. Anschließend wird das Zetapotential im "ZetaSizer 3000HSA" (Malvern Instruments, Herrenberg, Deutschland) bei 23°C bestimmt.

### Lagertest

Aufbewahrung einer Probe in einer 1 Liter Polyethylen-Flasche. Sichtprüfung, ob sich die Flasche aufbläht, was ein Zeichen für eine Gasentwicklung darstellt.

Sofern nicht abweichend vermerkt, beziehen sich alle Prozentangaben auf Gewichtsprozent.

Sofern nicht abweichend vermerkt, beziehen alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrellationsspektroskopie (Gerät: Malvern Zetasizer 1000, Malver Inst. Limited) bestimmt.

Die Festkörpergehalte wurden ermittelt durch Erhitzen einer ausgewogenen Probe auf 120°C. Bei Gewichtskonstanz wurde durch erneutes Auswiegen der Probe Festkörpergehalt berechnet.

Die Kontrolle auf freie NCO-Gruppen wurde mittels IR-Spektroskopie (Bande bei 2260 cm⁻¹) durchgeführt.

Messung der Speichermodule der jeweiligen Klebstofffilme:
Die Feststoffkonzentrationen der Proben lagen bei ca. 30 bzw. 40 %. Die Proben wurden zunächst mit einem Glasstab gut durchmischt.

Die Untersuchungen wurden mit einem als Filmrheometer bezeichneten Ultraschallreflexionsverfahren durchgeführt. Eine Beschreibung der Methode findet sich beispielsweise in Alig, I.; Lellinger, D., Chemical Innovation 30 (2), 13 (2000). Bei der angewandten Methode wird der Reflexionskoeffizient einer Ultraschallwelle bei einer Messfrequenz von 5 MHz an der Grenzfläche zwischen Messzelle und Probe ermittelt. Durch die freie Oberfläche des Films kann der Schubmodul der Probe während der Filmbildung und der Kristallisation bestimmt werden.

Die Proben wurden zur Untersuchung auf die Quarzkristalle des Ultraschallfilmrheometers als Film mit einer Nassfilmdicke von 300 µm aufgerakelt.

Die Trocknung und Filmbildung wurden bei einer Temperatur von 55°C und einer relativen Luftfeuchte von 50 % durchgeführt. Die Trockenfilmdicke lag bei etwa 80 bis 100 µm, die damit der minimalen Filmdicke entspricht. Zur Kontrolle, ob die Messung nicht durch eine zu geringe Filmdicke beeinflusst wurde, wird nachträglich auf dem getrockneten Film ein Streifen Klebeband befestigt und eine Ultraschall-Kontrollmessung durchgeführt. Wenn der Modulwert sich nicht geändert hat, war die Filmdicke ausreichend. Bei allen durchgeführten Messungen wurde die Mindestfilmdicke erreicht, die jeweiligen Ergebnisse sind daher unabhängig von der Filmdicke.

### Beispiele

### 1) Vergleichsbeispiel 1, analog Nanoharnstoff 1 aus WO-A 2005/063873

319,8 g Bayhydur^{®} VP LS 2336 werden bei Raumtemperatur in 746,20 g entionisiertes Wasser unter Rühren zugegeben und 10 Minuten nachgerührt. Danach werden 0,05 g Triäthylendiamin (Diazabicyclononan) zugegeben und bei Raumtemperatur kräftig gerührt. Nach 9 Stunden fand ein Aufschäumen statt, wobei der Schaum mehr als das dreifache Volumen des Reaktionsansatzes einnahm und aus dem Reaktionsgefäß heraus schäumte.

Die verbleibende Dispersion wurde noch weitere 10 Stunden gerührt und enthielt danach keine Isocyanat-Gruppen mehr (IR-Spektrum). Es entstand eine weiße Dispersion mit nachfolgenden Eigenschaften:

| | |
|---|---|
| Feststoffgehalt: | 29 % |
| Partikelgröße (LKS): | 89 nm |
| Viskosität (Viskosimeter, 23°C): | < 50 mPas |

Ladungsbestimmung: Gesamtladung 318 ± 32 µeq/g, Oberflächenladung 203 ± 5 µeq/g
Zetapotential (pH = 8): 44,3 ± 0,6
Koagulationstests: Koagulation findet statt
Lagertest: Aufblähen der Flasche nach ca. 2 Wochen erkennbar

Im dem Verfahren ergaben sich Probleme betreffend der Reaktionskinetik, wobei die Reaktion erst nach 9 Stunden gestartet ist, dann aber innerhalb weniger Minuten stark exotherm wurde und durch die dabei stattfindende Schaumbildung nicht kontrollierbar war.

### 2) Vergleichsbeispiel 2

1640 g Bayhydur^{®} VP LS 2336 werden bei Raumtemperatur in 3851,2 g entionisiertes Wasser unter Rühren und 0,32 g Isofoam^{®} 16 zugegeben und 10 Minuten nachgerührt. Danach werden 10,36 g Triäthylamin zugegeben und bei Raumtemperatur kräftig gerührt. Nach 3 Stunden fand ein starkes Überschäumen aus dem Reaktionsgefäß statt, so dass der Ansatz durch Zusatz einer großen Menge kalten Wassers abgebrochen werden musste.

Es zeigte sich, dass eine Erhöhung der Menge an Base geeignet war, um die Reaktion zu beschleunigen, die Schaumbildung wurde durch die Zugabe des Entschäumers nicht ausreichend unterdrückt.

### 3) Vergleichsbeispiel 3

Es wurde verfahren wie bei Vergleichsbeispiel 2 beschrieben, jedoch wurde der Entschäumer erst nach 3 Stunden zugegeben, nachdem durch erste Schaumentwicklung der Reaktionsstart erkennbar war. Dadurch nahm der Schaum weniger als 4 Liter an zusätzlichem Volumen im Reaktionsgefäß ein, ein Überschäumen des Ansatzes konnte dadurch vermieden werden.

Die erhaltene weiße Dispersion hatte nachfolgenden Eigenschaften:

| | |
|---|---|
| Feststoffgehalt: | 29 % |
| Partikelgröße (LKS): | 116 nm |
| Viskosität (Viskosimeter, 23°C): | < 50 mPas |
| | |
| pH (23°C): | 6,03 |

Ladungsbestimmung: Gesamtladung 150 ± 11 µeq/g, Oberflächenladung 98 ± 5 µeq/g
Zetapotential (pH = 8): 42,8 ± 0,3
Koagulationstests: Koagulation findet statt
Lagertest: Aufblähen der Flasche nach ca. 2 Wochen erkennbar

Es zeigte sich, dass es vorteilhaft ist, den Entschäumer erst im Verlauf der Reaktion zuzusetzen. Weiterhin zeigte sich, dass die erhaltene Dispersion nicht kompatibel ist mit anionisch hydrophilierten Dispersionen.

### 4) Vergleichsbeispiel 4

Es wurde verfahren wie bei Vergleichsbeispiel 3 beschrieben, jedoch wurden 2186,6 g Bayhydur^{®} VP LS 2336 zugesetzt. Nach ca. 3 Stunden führte der Reaktionsstart zu einem starken Überschäumen des Reaktionsmischung und zu einer Verdickung des Reaktionsansatzes. Das Aufschäumen erfolgte sehr schnell und war durch weiteres Zutropfen von Isofoam 16 nicht kontrollierbar. Daher wurde der Ansatz durch starkes Verdünnen mit kaltem Wasser und unter Kühlung im Eisbad abgebrochen.

Es zeigte sich, dass mit der beschriebenen Methode, trotz der Verwendung eines Entschäumers, eine Dispersion mit einem 40%igen Festkörpergehalt nicht herstellbar ist.

### 5) Vergleichsbeispiel 5

Es wurde verfahren wie bei Vergleichsbeispiel 3 beschrieben, jedoch wurden 1913 g Bayhydur^{®} VP LS 2336 zugesetzt. Nach ca. 3 Stunden führte der Reaktionsstart zu einem starken Überschäumen des Reaktionsmischung.. Das Aufschäumen erfolgte sehr schnell und war durch weiteres Zutropfen von Isofoam^{®} 16 nicht kontrollierbar. Daher wurde der Ansatz durch starkes Verdünnen mit kaltem Wasser abgebrochen.

Es zeigte sich, dass mit der beschriebenen Methode, trotz der Verwendung eines Entschäumers, eine Dispersion mit einem 35%igen Festkörpergehalt nicht herstellbar ist.

### 6) Nanoharnstoff, erfindungsgemäß, portionsweise Zugabe von hydrophiliertem Isocyanat zu Wasser, 30% Festkörper

Zu einer Lösung von 8,25 g Triethylamin und 0,09 g Isofoam^{®} 16 in 976,2 g entionisiertem Wasser wurden bei Raumtemperatur unter heftigem Rühren 136,67 g Bayhydur^{®} VP LS 2336 gegeben und weiter gerührt. Mittels einer angeschlossenen Gasuhr wurde die Kohlendioxid-Entwicklung verfolgt, die Zugabe der nächsten Portion Bayhydur^{®} VP LS 2336 erfolgte erst nach Abreaktion eines Großteils der Isocyanatgruppen. Nach 3 Stunden und nach 6 Stunden wurden jeweils weitere 136,67 g Bayhydur^{®} VP LS 2336 zugesetzt und nach der letzten Zugabe wurde noch weiter 5 Stunden gerührt. Der während der Reaktion entwickelte Schaum nahm ein Volumen von maximal 200 ml ein.

Die erhaltene weiße Dispersion hatte nachfolgenden Eigenschaften:

| | |
|---|---|
| Feststoffgehalt: | 30% |
| Partikelgröße (LKS): | 94 nm |
| Viskosität (Viskosimeter, 23°C): | < 50 mPas |
| | |
| pH (23°C): | 7,33 |

Koagulationstests: Keine Koagulation erkennbar.
Ladungsbestimmung: Gesamtladung 124 ± 6 µeq/g, Oberflächenladung 4 ± 1 µeq/g
Zetapotential (pH = 8): 11,3 ± 1,6
Lagertest: Aufblähen der Flasche nach ca. 2 Wochen erkennbar, es wurde innerhalb von 12 Wochen keine Bildung eines Niederschlages beobachtet.

Es zeigte sich, dass auch die portionsweise Zugabe von hydrophiliertem Isocyanat zu Wasser möglich ist. Obwohl sich bereits Nanoharnstoff-Partikel gebildet haben, können in dieser Dispersion weitere Partikel gebildet werden, sobald eine neue Portion hydrophiliertes Isocyanat zugesetzt wird. Überaschenderweise lagern sich die neu zugesetzten Partikel nicht an bereits bestehende Partikel an, dies würde zu sehr großen Partikeln und damit zu instabilen Dispersionen führen. Das dies nicht der Fall ist, beweist die Partikelgrößenmessung von < 400 nm mittels LKS-Bestimmung und die Tatsache, dass auch innerhalb 12-wöchiger Raumtemperaturlagerung keine Bodensatzbildung zu beobachten war.

### 7) Nanoharnstoff, erfindungsgemäß, portionsweise Zugabe von hydrophiliertem Isocyanat zu Wasser, 40% Festkörper

Zu einer Lösung von 20,72 g Triethylamin in 4952 g entionisiertem Wasser wurden bei 30°C unter heftigem Rühren 820,20 g Bayhydur^{®} VP LS 2336 und anschließend 0,32 g Isofoam^{®} 16 gegeben und weiter gerührt. Nach 3, 6 und 9 Stunden wurden jeweils weitere 820,20 g Bayhydur^{®} VP LS 2336 und je anschließend 0,32 g Isofoam 16 zugesetzt und anschließend bei 30°C weitere 4 Stunden nachgerührt. Danach wurde bei 200 mbar Vakuum und 30°C weiter 3 Stunden gerührt und die entstandene Dispersion abgefüllt.

Die erhaltene weiße Dispersion hatte nachfolgenden Eigenschaften:

| | |
|---|---|
| Feststoffgehalt: | 40% |
| Partikelgröße (LKS): | 83 nm |
| Viskosität (Viskosimeter, 23°C): | < 50 mPas |
| | |
| pH (23°C): | 8,33 |

Ladungsbestimmung: Gesamtladung 57 ± 6 µeq/g, Oberflächenladung 15 ± 1 µeq/g
Zetapotential (pH = 8): 24,9 ± 1,0
Koagulationstests: Keine Koagulation erkennbar
Lagertest: Kein Aufblähen der Flasche innerhalb von 12 Wochen erkennbar, weiterhin wurde innerhalb von 12 Wochen keine Bildung eines Niederschlages beobachtet

Es zeigte sich, dass entsprechend der erfindungsgemäßen Durchführung auch Dispersionen zugänglich sind, die einen Feststoffgehalt von über 30% aufweisen. Ein entsprechender Versuch gemäß Methoden des Standes der Technik gelang nicht (Vergleichsbeispiel 3 und 4). Die Lagerstabilität und Verträglichkeit mit anionisch hydrophilierten Dispersionen ist gegeben.

### 8) Nanoharnstoff, erfindungsgemäß, portionsweise Dispergierung von hydrophiliertem Isocyanat in Wasser in eine Mischkessel und Überführung in den Reaktionskessel, 40% Festkörper

Eine Lösung von 10,0 g Triethylamin und 0,27 g Isofoam^{®} 16 werden in 200 g entionisiertem Wasser bei 30°C unter Rühren vorgelegt.

In einem zweiten Gefäß werden bei Raumtemperatur 700 g Bayhydur^{®} VP LS 2336 zu 1050 g entionisiertem Wasser gegeben und durch 15-minütiges Rühren dispergiert. Die Dispersion wird anschließend in den ersten Kolben überführt.

Nach 3, 6 und 9 Stunden wurden jeweils weitere 700 g Bayhydur^{®} VP LS 2336 zu 1050 g entionisiertem Wasser gegeben und durch 15-minütiges Rühren dispergiert und in den ersten Kessel überführt. Anschließend bei 30°C weitere 4 Stunden nachgerührt. Danach wurde bei 200 mbar Vakuum und 30°C weiter 3 Stunden gerührt und die entstandene Dispersion abgefüllt.

Die erhaltene weiße Dispersion hatte nachfolgenden Eigenschaften:

| | |
|---|---|
| Feststoffgehalt: | 40% |
| Partikelgröße (LKS): | 117 nm |
| Viskosität (Viskosimeter, 23°C): | < 50 mPas |
| | |
| pH (23°C): | 6,98 |

Ladungsbestimmung: Gesamtladung 32 ± 2 µeq/g, Oberflächenladung 7 ± 2 µeq/g
Zetapotential (pH = 8): 3,2 ± 0,4
Koagulationstests: Keine Koagulation erkennbar.
Lagertest: Kein Aufblähen der Flasche innerhalb von 12 Wochen erkennbar, weiterhin wurde innerhalb von 12 Wochen keine Bildung eines Niederschlages beobachtet.

Es zeigte sich, dass auch durch portionsweises Dispergieren des hydrophilierten Isocyanates in Wasser mit anschließender Überführung in ein Reaktionsgefäß die Herstellung einer festkörperreichen Nanoharnstoff-Dispersion ermöglicht.

### 9) Herstellung eines Klebstoffs auf Basis der Nanoharnstoff-Dispersionen

**Tabelle 1: Herstellung der Formulierung für die Vergleichsuntersuchungen**

| Produkt | Funktion | Zusatz als | Feststoffgehalt (%) | eingesetzte Menge in g, bezogen auf Feststoff |
|---|---|---|---|---|
| Dispercoll^{®} C 84 (1) | Polymer | Dispersion | 55 | 100 |
| Rhenofit^{®} DDA-EM 50 (2) | Alterungsschutzmittel | Dispersion | 50 | 1,8 |
| Borchers^{®} 8902 (3) | ZnO | Dispersion | 25 | 3,6 |
| Nanoharnstoff | Additiv | Dispersion | 30-40 | 15 |

| | | | | |
|---|---|---|---|---|
| Bezugsquellen: (1): Bayer MaterialScience AG, Leverkusen, D (wässrige Polychloropren Dispersion) (2): Rhein Chemie GmbH, Mannheim, D (50 % Diphenylamin-Derivat in wässriger Emulsion) (3): Borchers GmbH, Langenfeld, D (Zinkoxid-Paste) | | | | |

Für die Herstellung der Formulierung wird die Polychloropren Dispersion in einem Becherglas vorgelegt. Unter vorsichtigem Rühren werden das Alterungsschutzmittel, ZnO und der Nanoharnstoff zugegeben.

### 10) Ergebnisse der rheologischen Untersuchungen

Als relevantes Ergebnis wurde der Speichermodul der jeweiligen Klebstofffilme nach einer Messdauer von 30 min (bei 55°C) herangezogen.

| Probenbezeichnung | Speichermodul G' [MPa] |
|---|---|
| Klebstoff ohne Nanoharnstoff | 14,8 |
| Klebstoff ohne Nanoharnstoff nach Vergleichsbeispiel 3 | 22,6 |
| Klebstoff mit Nanoharnstoff nach erfindungsgemäßem Beispiel 7 | 26,9 |
| Klebstoff mit Nanoharnstoff nach erfindungsgemäßem Beispiel 8 | 30,4 |

## Patentansprüche

1. Nanoharnstoff-Dispersionen, enthaltend Nanoharnstoff-Partikel mit einer Partikelgröße von 10 bis 300 nm und einem Zeta-Potential (bei pH (23°C) = 8,0) von 0 bis 40 mVₗ,
dadurch erhältlich dass
in einem ersten Schritt Polyisocyanate, die Biuret-, Isocyanurat- oder Uretdiongruppen aufweisende Modifizierungsprodukte des Hexamethylendiisocyanats oder des Isophorondiisocyanats sind und die über nichtionische Gruppen als Hydrophilierung verfügen, mit Wasser vermischt werden und danach zu Harnstoff-Gruppen abgebaut werden, wobei
das Verhältnis von hydrophiliertem Polyisocyanat zu Wasser so gewählt wird, dass ein Gesamt-Gewichtsverhältnis zwischen 1 zu 20 und 1 zu 0,75 resultiert,
das hydrophilierte Polyisocyanat portionsweise zu dem Wasser zugegeben wird und die Gesamtrnenge des hydrophilierten Polyisocyanates in 2 bis 50 gleich oder unterschiedlich große Portionen aufgeteilt wird und nach Zugabe jeder Polyisocyanat-Portion zwischen 5 Minuten und 12 Stunden gewartet wird, bis die nächste Portion zugegeben wird,
ein oder mehrere Katalysatoren, bei denen es sich um tertiäre Amine handelt, in Mengen von 0,01 bis 8 Gew.-%, bezogen auf den gesamten Festkörpergehalt, zugesetzt werden, und
die Hydrophilierung der Polyisocyanate über nichtionisch hydrophilierend wirkende Verbindungen erfolgt, welche einwertige, im statistischen Mittel 5 bis 70 Ethylenoxideinheiten pro Molekül aufweisende Polyalkylenoxidpolyetheralkohole sind.

2. Nanoharnstoff-Dispersionen, enthaltend Nanoharnstoff-Partikel mit einer Partikelgröße von 10 bis 300 nm und einern Zeta-Potential (bei pH (23°C) = 8,0) von 0 bis 40 mV,
dadurch erhältlich dass
in einern ersten Schritt Polyisocyanate, die Biuret-, Isocyanurat- oder Uretdiongruppen aufweisende Modifizierungsprodukte des Hexamethylendiisocyanats oder des Isophorondiisocyanats sind und die über nichtionische Gruppen als Hydrophilierung verfügen, mit Wasser vermischt werden und danach zu Harnstoff-Gruppen abgebaut werden, wobei
das Verhältnis von hydrophiliertem Polyisocyanat zu Wasser so gewählt wird, dass ein Gesamt-Gewichtsverhältnis zwischen 1 zu 20 und 1 zu 0,75 resultiert,
das hydrophilierte Polyisocyanat portionsweise zu dem Wasser zugegeben wird und die Gesamtmenge des hydrophilierten Polyisocyanates in 2 bis 50 gleich oder unterschiedlich große Portionen aufgeteilt wird und nach Zugabe jeder Polyisocyanat-Portion zwischen 5 Minuten und 12 Stunden gewartet wird, bis die nächste Portion zugegeben wird,
ein oder mehrere Katalysatoren, bei denen es sich um tertiäre Amine handelt, in Mengen von 0,01 bis 8 Gew.-%, bezogen auf den gesamten Festkörpergehalt, zugesetzt werden, und
die Hydrophilierung der Polyisocyanate über nichtionisch hydrophilierend wirkende Verbindungen erfolgt, welche mono funktionelle gemischte Polyalkylenoxidpolyether sind, die mindestens 40 mol-% Ethylenoxid- und maximal 60 mol-% Propylenoxideinheiten aufweisen.

3. Nanohamstoff-Dispersionen gemäß Anspruch 1 oder 2, **dadurch gekennzeichnet, dass** die in den Nanohamstoff-Dispersionen enthaltenen Partikel auf der Partikeloberfläche kationische oder basische Gruppen, gemessen über eine Säure-Base-Titration, in einer Menge von 0 bis 95 µmol pro Gramm Festkörper aufweisen.

4. Verfahren zur Herstellung der Nanoharnstoff-Dispersionen, enthaltend Nanoharnstoff-Partikel mit einer Partikelgröße von 10 bis 300 nm und einem ZetaPotential (bei pH (23°C) = 8,0) von 0 bis 40 mV,
**dadurch gekennzeichnet, dass** in einem ersten Schritt Polyisocyanate, die Biuret-, Isocyanurat- oder Uretdiongruppen aufweisende Modifizierungsprodukte des Hexamethylendiisocyanats oder des Isophorondiisocyanats sind und die über nichtionischen Gruppen als Hydrophilierung verfügen, mit Wasser vermischt werden und danach zu Harnstoff-Gruppen abgebaut werden, wobei
das Verhältnis von hydrophiliertem Polyisocyanat zu Wasser so gewählt wird, dass ein Gesamt-Gewichtsverhältnis zwischen 1 zu 20 und 1 zu 0,75 resultiert.
das hydrophilierte Polyisocyanat portionsweise zu dem Wasser zugegeben wird und die Gesamtrnenge des hydrophilierten Polyisocyanates in 2 bis 50 gleich oder unterschiedlich große Portionen aufgeteilt wird und nach Zugabe jeder Polyisocyanat-Portion zwischen 5 Minuten und 12 Stunden gewartet wird, bis die nächste Portion zugegeben wird,
ein oder mehrere Katalysatoren, bei denen es sich um tertiäre Amine handelt, in Mengen von 0,01 bis 8 Gew.-%, bezogen auf den gesamten Festkörpergehalt, zugesetzt werden, und
die Hydrophilierung der Polyisocyanate über nichtionisch hydrophilierend wirkende Verbindungen erfolgt, welche einwertige, im statistischen Mittel 5 bis 70 Ethylenoxideinheiten pro Molekül aufweisende Polyalkylenoxidpolyetheralkohole sind.

5. Verfahren zur Herstellung der Nanoharnstoff-Dispersionen, enthaltend Nanoharnstoff-Partikel mit einer Partikelgröße von 10 bis 300 nm und einem Zeta-Potential (bei pH (23°C) = 8,0) von 0 bis 40 mV,
**dadurch gekennzeichnet, dass** in einem ersten Schritt Polyisocyanate, die Biuret-, Isocyanurat- oder Uretdiongruppen aufweisende Modifizierungsprodukte des Hexamethylendiisocyanats oder des Isophorondiisocyanats sind und die über nichtionischen Gruppen als Hydrophilierung verfügen, mit Wasser vermischt werden und danach zu Harnstoff-Gruppen abgebaut werden, wobei
das Verhältnis von hydrophiliertem Polyisocyanat zu Wasser so gewählt wird, dass ein Gesamt-Gewichtsverhältnis zwischen 1 zu 20 und 1 zu 0,75 resultiert.
das hydrophilierte Polyisocyanat portionsweise zu dem Wasser zugegeben wird und die Gesamtrnenge des hydrophilierten Polyisocyanates in 2 bis 50 gleich oder unterschiedlich große Portionen aufgeteilt wird und nach Zugabe jeder Polyisocyanat-Portion zwischen 5 Minuten und 12 Stunden gewartet wird, bis die nächste Portion zugegeben wird,
ein oder mehrere Katalysatoren, bei denen es sich um tertiäre Amine handelt, in Mengen von 0,01 bis 8 Gew.-%, bezogen auf den gesamten Festkörpergehalt, zugesetzt werden, und
die Hydrophilierung der Polyisocyanate über nichtionisch hydrophilierend wirkende Verbindungen erfolgt, welche mono funktionelle gemischte Polyalkylenoxidpolyether sind, die mindestens 40 mol-% Ethylenoxid- und maximal 60 mol-% Propylenoxideinheiten aufweisen.

6. Verfahren gemäß Anspruch 4 oder 5, **dadurch gekennzeichnet, dass** anschließend an die Reaktion die Dispersion evakuiert wird, wobei die Temperaturen dafür zwischen 0°C und 80°C liegen und während der Evakuierung der Druck zwischen 1 und 900 mbar beträgt.

7. Verfahren gemäß Anspruch 4, 5 oder 6, **dadurch gekennzeichnet, dass** der Reaktion zusätzlich isocyanatreaktive Gruppen enthaltende Verbindungen zugesetzt werden, wobei das Verhältnis der isocyanatreaktiven Gruppen zu den Isocyanatgruppen kleiner als 0,5 gewählt wird.

8. Verfahren gemäß einem der Ansprüche 4 bis 7, **dadurch gekennzeichnet, dass** die Reaktion in einem einzigen Gefäß stattfindet.

9. Verwendung der Nanohamstoff-Dispersionen gemäß Anspruch 1 oder 2 zur Herstellung von Lacken, Farben, Klebstoffen und Dichtstoffen.

10. Beschichtungsmittel enthaltend Nanohamstoff-Dispersionen gemäß Anspruch 1 oder 2.

## Claims

1. Nanourea dispersions comprising nanourea particles having a particle size of 10 to 300 nm and a zeta potential (at a pH (23°C) of 8.0) of 0 to 40 mV,
obtainable by,
in a first step, mixing polyisocyanates, which are modification products of hexamethylene diisocyanate or of isophorone diisocyanate that have biuret, isocyanurate or uretdione groups and which possess nonionic groups for hydrophilicization, with water and thereafter breaking them down to urea groups,
the ratio of hydrophilicized polyisocyanate to water being chosen so as to result in a total weight ratio of between 1:20 and 1:0.75,
adding the hydrophilicized polyisocyanate in portions to the water, and dividing the total amount of the hydrophilicized polyisocyanate into 2 to 50 equally or differently sized portions, and following the addition of each polyisocyanate portion by a pause of between 5 minutes and 12 hours before the next portion is added,
adding one or more catalysts, these being tertiary amines, in amounts of 0.01% to 8% by weight based on the total solids content, and
hydrophilicizing the polyisocyanates via compounds which have a nonionic hydrophilicizing action and which are monohydric polyalkylene oxide polyether alcohols having on average 5 to 70 ethylene oxide units per molecule.

2. Nanourea dispersions comprising nanourea particles having a particle size of 10 to 300 nm and a zeta potential (at a pH (23°C) of 8.0) of 0 to 40 mV,
obtainable by,
in a first step, mixing polyisocyanates, which are modification products of hexamethylene diisocyanate or of isophorone diisocyanate that have biuret, isocyanurate or uretdione groups and which possess nonionic groups for hydrophilicization, with water and thereafter breaking them down to urea groups,
the ratio of hydrophilicized polyisocyanate to water being chosen so as to result in a total weight ratio of between 1:20 and 1:0.75,
adding the hydrophilicized polyisocyanate in portions to the water, and dividing the total amount of the hydrophilicized polyisocyanate into 2 to 50 equally or differently sized portions, and following the addition of each polyisocyanate portion by a pause of between 5 minutes and 12 hours before the next portion is added,
adding one or more catalysts, these being tertiary amines, in amounts of 0.01% to 8% by weight based on the total solids content, and
hydrophilicizing the polyisocyanates via compounds which have a nonionic hydrophilicizing action and which are monofunctional mixed polyalkylene oxide polyethers which have at least 40 mol% of ethylene oxide units and not more than 60 mol% of propylene oxide units.

3. Nanourea dispersions according to Claim 1 or 2, **characterized in that** the particles present in the nanourea dispersions have cationic or basic groups on the particle surface, measured via an acid-base titration, in an amount of 0 to 95 µmol per gram of solids.

4. Process for preparing the nanourea dispersions comprising nanourea particles having a particle size of 10 to 300 nm and a zeta potential (at a pH (23°C) of 8.0) of 0 to 40 mV,
**characterized in that** in a first step polyisocyanates which are modification products of hexamethylene diisocyanate or of isophorone diisocyanate that have biuret, isocyanurate or uretdione groups and which possess nonionic groups for hydrophilicization are mixed with water and thereafter are broken down to urea groups,
the ratio of hydrophilicized polyisocyanate to water being chosen so as to result in a total weight ratio of between 1:20 and 1:0.75,
the hydrophilicized polyisocyanate is added in portions to the water, and the total amount of the hydrophilicized polyisocyanate is divided into 2 to 50 equally or differently sized portions, and the addition of each polyisocyanate portion is followed by a pause of between 5 minutes and 12 hours before the next portion is added,
one or more catalysts, which are tertiary amines, are added in amounts of 0.01% to 8% by weight, based on the total solids content, and
the hydrophilicization of the polyisocyanates takes place via compounds which have a nonionic hydrophilicizing effect and which are monohydric polyalkylene oxide polyether alcohols having on average 5 to 70 ethylene oxide units per molecule.

5. Process for preparing the nanourea dispersions comprising nanourea particles having a particle size of 10 to 300 nm and a zeta potential (at a pH (23°C) of 8.0) of 0 to 40 mV,
**characterized in that** in a first step polyisocyanates which are modification products of hexamethylene diisocyanate or of isophorone diisocyanate that have biuret, isocyanurate or uretdione groups and which possess nonionic groups for hydrophilicization are mixed with water and thereafter are broken down to urea groups,
the ratio of hydrophilicized polyisocyanate to water being chosen so as to result in a total weight ratio of between 1:20 and 1:0.75,
the hydrophilicized polyisocyanate is added in portions to the water, and the total amount of the hydrophilicized polyisocyanate is divided into 2 to 50 equally or differently sized portions, and the addition of each polyisocyanate portion is followed by a pause of between 5 minutes and 12 hours before the next portion is added,
one or more catalysts, which are tertiary amines, are added in amounts of 0.01% to 8% by weight, based on the total solids content, and
the hydrophilicization of the polyisocyanates takes place via compounds which have a nonionic hydrophilicizing effect and which are monofunctional mixed polyalkylene oxide polyethers which have at least 40 mol% of ethylene oxide units and not more than 60 mol-% of propylene oxide units.

6. Process according to Claim 4 or 5, **characterized in that**, subsequent to the reaction, the dispersion is evacuated, the temperatures for this lying between 0°C and 80°C and during the evacuation the pressure being between 1 and 900 mbar.

7. Process according to Claim 4, 5 or 6, **characterized in that** additionally compounds containing isocyanate-reactive groups are added to the reaction, the chosen ratio of the isocyanate-reactive groups to the isocyanate groups being less than 0.5.

8. Process according to any of Claims 4 to 7, **characterized in that** the reaction takes place in a single vessel.

9. Use of the nanourea dispersions according to Claim 1 or 2 for producing paints, inks, adhesives and sealants.

10. Coating compositions comprising nanourea dispersions according to Claim 1 or 2.

## Revendications

1. Dispersions de nano-urée, contenant des particules de nano-urée d'une taille de particule de 10 à 300 nm et d'un potentiel zêta (à pH (23 °C) = 8,0) de 0 à 40 mV,
pouvant être obtenues par :
lors d'une première étape, le mélange de polyisocyanates, qui sont des produits de modification comprenant des groupes biuret, isocyanurate ou
uretdione de diisocyanate d'hexaméthylène ou de diisocyanate d'isophorone et qui disposent de groupes non ioniques en tant qu'hydrophilisation, avec de l'eau, puis leur décomposition pour former des groupes urée,
le rapport entre le polyisocyanate hydrophilisé et l'eau étant choisi de manière à obtenir un rapport en poids total compris entre 1 sur 20 et 1 sur 0,75,
le polyisocyanate hydrophilisé étant ajouté en portions à l'eau et la totalité du polyisocyanate hydrophilisé étant divisée en 2 à 50 portions de taille identique ou différente et entre 5 minutes et 12 heures étant attendues après l'ajout de chaque portion de polyisocyanate avant l'ajout de la portion suivante,
un ou plusieurs catalyseurs, qui consistent en des amines tertiaires, étant ajoutés en quantités de 0,01 à 8 % en poids, par rapport à la teneur totale en solides, et
l'hydrophilisation des polyisocyanates ayant lieu par des composés à action hydrophilisante non ioniques, qui sont des polyoxydes d'alkylène-polyéther-alcools monovalents comprenant en moyenne statistique 5 à 70 unités oxyde d'éthylène par molécule.

2. Dispersions de nano-urée, contenant des particules de nano-urée d'une taille de particule de 10 à 300 nm et d'un potentiel zêta (à pH (23 °C) = 8,0) de 0 à 40 mV,
pouvant être obtenues par :
lors d'une première étape, le mélange de polyisocyanates, qui sont des produits de modification comprenant des groupes biuret, isocyanurate ou uretdione de diisocyanate d'hexaméthylène ou de diisocyanate d'isophorone et qui disposent de groupes non ioniques en tant qu'hydrophilisation, avec de l'eau, puis leur décomposition pour former des groupes urée,
le rapport entre le polyisocyanate hydrophilisé et l'eau étant choisi de manière à obtenir un rapport en poids total compris entre 1 sur 20 et 1 sur 0,75,
le polyisocyanate hydrophilisé étant ajouté en portions à l'eau et la totalité du polyisocyanate hydrophilisé étant divisée en 2 à 50 portions de taille identique ou différente et entre 5 minutes et 12 heures étant attendues après l'ajout de chaque portion de polyisocyanate avant l'ajout de la portion suivante,
un ou plusieurs catalyseurs, qui consistent en des amines tertiaires, étant ajoutés en quantités de 0,01 à 8 % en poids, par rapport à la teneur totale en solides, et
l'hydrophilisation des polyisocyanates ayant lieu par des composés à action hydrophilisante non ioniques, qui sont des polyoxydes d'alkylène-polyéthers mixtes monofonctionnels, qui comprennent au moins 40 % en moles d'unités oxyde d'éthylène et au plus 60 % en moles d'unités oxyde de propylène.

3. Dispersions de nano-urée selon la revendication 1 ou 2, **caractérisées en ce que** les particules contenues dans les dispersions de nano-urée comprennent sur la surface de particule des groupes cationiques ou basiques en une quantité, mesurée par un titrage acido-basique, de 0 à 95 µmol par gramme de solides.

4. Procédé de fabrication de dispersions de nano-urée, contenant des particules de nano-urée d'une taille de particule de 10 à 300 nm et d'un potentiel zêta (à pH (23 °C) = 8,0) de 0 à 40 mV,
**caractérisé en ce que**, lors d'une première étape, des polyisocyanates, qui sont des produits de modification comprenant des groupes biuret, isocyanurate ou uretdione de diisocyanate d'hexaméthylène ou de diisocyanate d'isophorone et qui disposent de groupes non ioniques en tant qu'hydrophilisation, sont mélangés avec de l'eau, puis décomposés pour former des groupes urée,
le rapport entre le polyisocyanate hydrophilisé et l'eau étant choisi de manière à obtenir un rapport en poids total compris entre 1 sur 20 et 1 sur 0,75,
le polyisocyanate hydrophilisé étant ajouté en portions à l'eau et la totalité du polyisocyanate hydrophilisé étant divisée en 2 à 50 portions de taille identique ou différente et entre 5 minutes et 12 heures étant attendues après l'ajout de chaque portion de polyisocyanate avant l'ajout de la portion suivante,
un ou plusieurs catalyseurs, qui consistent en des amines tertiaires, étant ajoutés en quantités de 0,01 à 8 % en poids, par rapport à la teneur totale en solides, et
l'hydrophilisation des polyisocyanates ayant lieu par des composés à action hydrophilisante non ioniques, qui sont des polyoxydes d'alkylène-polyéther-alcools monovalents comprenant en moyenne statistique 5 à 70 unités oxyde d'éthylène par molécule.

5. Procédé de fabrication de dispersions de nano-urée, contenant des particules de nano-urée d'une taille de particule de 10 à 300 nm et d'un potentiel zêta (à pH (23 °C) = 8,0) de 0 à 40 mV,
**caractérisé en ce que**, lors d'une première étape, des polyisocyanates, qui sont des produits de modification comprenant des groupes biuret, isocyanurate ou uretdione de diisocyanate d'hexaméthylène ou de diisocyanate d'isophorone et qui disposent de groupes non ioniques en tant qu'hydrophilisation, sont mélangés avec de l'eau, puis décomposés pour former des groupes urée,
le rapport entre le polyisocyanate hydrophilisé et l'eau étant choisi de manière à obtenir un rapport en poids total compris entre 1 sur 20 et 1 sur 0,75,
le polyisocyanate hydrophilisé étant ajouté en portions à l'eau et la totalité du polyisocyanate hydrophilisé étant divisée en 2 à 50 portions de taille identique ou différente et entre 5 minutes et 12 heures étant attendues après l'ajout de chaque portion de polyisocyanate avant l'ajout de la portion suivante,
un ou plusieurs catalyseurs, qui consistent en des amines tertiaires, étant ajoutés en quantités de 0,01 à 8 % en poids, par rapport à la teneur totale en solides, et
l'hydrophilisation des polyisocyanates ayant lieu par des composés à action hydrophilisante non ioniques, qui sont des polyoxydes d'alkylène-polyéthers mixtes monofonctionnels, qui comprennent au moins 40 % en moles d'unités oxyde d'éthylène et au plus 60 % en moles d'unités oxyde de propylène.

6. Procédé selon la revendication 4 ou 5, **caractérisé en ce qu'**après la réaction, la dispersion est évacuée, les températures étant pour cela comprises entre 0 °C et 80 °C, et la pression étant comprise entre 1 et 900 mbar pendant l'évacuation.

7. Procédé selon la revendication 4, 5 ou 6, **caractérisé en ce que** des composés contenant des groupes réactifs avec les isocyanates sont également ajoutés à la réaction, le rapport entre les groupes réactifs avec les isocyanates et les groupes isocyanate étant choisi inférieur à 0,5.

8. Procédé selon l'une quelconque des revendications 4 à 7, **caractérisé en ce que** la réaction a lieu dans un récipient unique.

9. Utilisation des dispersions de nano-urée selon la revendication 1 ou 2 pour la fabrication de laques, de peintures, d'adhésifs et de matériaux d'étanchéité.

10. Agents de revêtement contenant des dispersions de nano-urée selon la revendication 1 ou 2.
